# EUROPEAN PATENT SPECIFICATION

(11) **EP 3 340 808 B1**
(45) Date of publication and mention of the grant of the patent: **24.01.2024**
(21) Application number: 16840895.3
(22) Date of filing: 26.08.2016
(51) Int. Cl.: A23L 5/30, A23L 27/30, A23L 29/30, A23L 2/60, A23C 9/13, A23C 9/156

(54) **METHOD FOR PRODUCING SWEETENER COMPOSITIONS**
VERFAHREN ZUR HERSTELLUNG VON SÜSSSTOFFZUSAMMENSETZUNGEN
PROCÉDÉ DE PRODUCTION DE COMPOSITIONS ÉDULCORANTES

(30) Priority: 28.08.2015 US 201562211579 P; 02.10.2015 US 201562236829 P; 29.01.2016 US 201662289107 P
(43) Date of publication of application: 04.07.2018
(73) Proprietor: INCREDO LTD, 4952707 Petach Tikva (IL)
(72) Inventor: BANIEL, Avraham, deceased (IL); ZVIELY, Michael, 4952707 Petach Tikva (IL); ELIYAHU, Shay, 4952707 Petach Tikva (IL); GELBART, Noa, 4952707 Petach Tikva (IL); BANIEL, Eran, 4952707 Petach Tikva (IL); ROMM, Ronit, 4952707 Petach Tikva (IL); MAGAL SANTANA, Nadine, 4952707 Petach Tikva (IL); TRACHTENBERG, Alexander, 4952707 Petach Tikva (IL)
(74) Representative: J A Kemp LLP
(86) International application number: PCT/IB2016/001284
(87) International publication number: WO 2017/037531

(56) References cited:
- WO-A1-2015/041984
- WO-A2-2015/159156
- US-A- 3 704 138
- US-A1- 2006 051 480
- US-A1- 2008 044 521
- US-A1- 2008 213 452
- US-A1- 2009 297 670
- US-A1- 2011 195 170
- US-A1- 2013 236 604
- US-A1- 2015 018 432
- US-A1- 2016 242 439

## Description

### BACKGROUND OF THE INVENTION

Certain carbohydrates and polyols are commonly used as sweeteners. Sucrose, glucose, and other sweet mono-saccharides, di-saccharides, and oligosaccharides are fully metabolized when consumed in food. The sweetness of these natural sweeteners correlates with their calories in a fixed proportion. Excess sugar intake can pose several health problems. Artificial sweeteners have been used to reduce dietary sugar content, but they are not ideal sugar substitutes due to their after taste, absence of energy provided by sugars, and other health concerns. Sweetener polyols can offer a reduced calorie load and varying sweetness as compared to sweetener carbohydrates, but the cost of some sweetener polyols can be high. In such cases, a method to increase the sweetness of sweetener carbohydrates or sweetener polyols or to reduce the amount of sweetener carbohydrates or sweetener polyols while achieving equivalent sweetness is desired. For example, US 2009/297670 describes sweetener compositions comprising a sweetener carbohydrate in association with a nanoparticle whereby the sweetener carbohydrate coated nanoparticle exhibits enhanced sweetness compared to a comparable amount of sweetener carbohydrate in unassociated form. Another promising strategy focuses on allosteric modulation of the sweet taste receptor by sweet taste enhancers. These artificially synthesized molecules do not taste sweet but can significantly modulate the perception of sweetness for sucrose and other sweeteners; however, they can be limited in strength and selectivity and have so far been tested on limited products. The present disclosure provides for the manipulation of the proportion between sweetener amount and calories so that a desired sweetness may correlate with lower calorie values while retaining a similar sensory profile to the sweetener. This effect is achieved through the presentation of the carbohydrate sweetener or polyol sweetener in the form of a composition belonging to a class of compositions described below. The perception of sweetness of a sweetener carbohydrate or sweetener polyol is retained while reducing the caloric value thereof by virtue of it being provided in a composition as described hereinafter.

### SUMMARY OF THE INVENTION

The present disclosure relates to sweetener compositions. More particularly, the present invention relates to a method for the preparation of carbohydrate sweetener compositions and polyol sweetener compositions having enhanced sweetness as compared to that of the carbohydrate component or polyol component thereof.

In particular, the present invention provides a method of making a sweetener composition, the method comprising adding silica to a syrup comprising a solvent and one or more sweetener carbohydrates and/or sweetener polyols to form a sweetener composition; and dispersing the silica; wherein the sweetener composition comprises one or more sweetener carbohydrates and/or sweetener polyols and about 0.01-2% silica weight/weight relative to a sum of total sweetener carbohydrate and sweetener polyol; the sweetener composition has enhanced sweetness compared to a control composition; and the control composition has the same contents by identity and quantity as the sweetener composition but without the silica.

In some cases, a sonicator, homogenizer, microfluidizer, and/or colloid mill can be used to disperse a carrier compound. For example, when small solid particles are formed within a liquid medium, a dispersion may be obtained. In some cases, dispersed carrier compound (e.g., silica particles) is available to make surface interactions with the sweetener carbohydrates and/or sweetener polyols on the carrier compound's surface and/or within pores of the carrier compound.

A method described herein can comprise dispersing the carrier compound, one or more sweetener carbohydrates and/or sweetener polyols, syrup, or sweetener composition. A method described herein can comprise homogenizing and/or sonicating the sweetener composition. A cooling or heating step can optionally take place prior to sonicating and/or homogenizing. Homogenizing the sweetener composition can be performed, for example, using vigorous stirring, high shear homogenization, high pressure homogenization, or a microfluidizer. Sonicating the sweetener composition can be performed using a bath sonicator or probe sonicator. A method described herein can further comprise a pre-mixing step. A method described herein can further comprise passing the sweetener composition through a sieve or sieving tower. A method described herein can further comprise drying the sweetener composition. A method described herein can further comprise precipitating the sweetener composition using an antisolvent or volatile liquid. A method described herein can further comprise mixing a solvent with one or more sweetener carbohydrates and/or sweetener polyols to form a syrup.

A sweetener composition described herein can be obtained by mechanical coating or mixing. The mechanical coating or mixing may be by mortar and pestle or mechanical grinder. The coating may be formed in a liquid medium.

In some embodiments of a method or sweetener composition described herein, the sweetness is enhanced by at least 10, 20, 30, 40, or 50%, for example, the sweetness is enhanced by 40-60%. Enhanced sweetness for a sweetener composition can be determined using a taste test such as any of the taste tests described herein.

In the method of the invention, the sweetener composition comprises about 0.01-2% carrier compound weight/weight relative to a sum of total sweetener carbohydrate and sweetener polyol. In some embodiments, the sweetener composition comprises about 0.01-0.5%, up to 2%, or up to 1% carrier compound weight/weight relative to a sum of total sweetener carbohydrate and sweetener polyol.

In some embodiments of a method or sweetener composition described herein, the one or more sweetener carbohydrates and/or sweetener polyols are one or more sweetener carbohydrates, such as one sweetener carbohydrate. In some embodiments of a method or sweetener composition described herein, the one or more sweetener carbohydrates and/or sweetener polyols are one or more sweetener polyols, such as one sweetener polyol.

A sweetener carbohydrate can be one that is selected from a group consisting of sucrose, glucose, fructose, maltose, lactose, mannose, allulose, tagatose, xylose, galactose, arabinose, galactofructose, high fructose corn syrup, high maltose corn syrup, or any combination thereof, such as sucrose, glucose, fructose, or any combination thereof. A sweetener polyol can be one that is selected from a group consisting of xylitol, maltitol, erythritol, sorbitol, threitol, arabitol, hydrogenated starch hydrolysates, isomalt, lactitol, mannitol, galactitol (dulcitol), and any combination thereof. In some embodiments of any method or sweetener composition described herein, the one or more sweetener carbohydrates are sucrose, glucose, maltose, lactose, high fructose corn syrup, high maltose corn syrup, or a combination thereof. In some embodiments of a method or sweetener composition described herein, the one or more sweetener carbohydrates and/or sweetener polyols are selected from the group consisting of fructose, mannose, allulose, tagatose, xylose, galactose, arabinose, galactofructose, and any combination thereof, such as from the group consisting of mannose, allulose, xylose, galactose, arabinose, galactofructose, and any combination thereof. In some embodiments of a method or sweetener composition described herein, the one or more sweetener carbohydrates and/or sweetener polyols is fructose or tagatose. In some embodiments of a method or sweetener composition described herein, the one or more sweetener carbohydrates are high fructose corn syrup or high maltose corn syrup. In some embodiments of a method or sweetener composition described herein, the sweetener composition comprises a dairy product, fruit juice, fruit juice concentrate, nectar, or vegetable juice.

In the method of the invention, the carrier compound is silica, such as amorphous silica, fumed silica, precipitated silica or silica gel. In some embodiments, the carrier compound is Perkasil ^{®}, Tixosil ^{®}, Trisyl ^{®}, Daraclar ^{®}, Zeofree ^{®}, Silica gel ^{®}, Syloid ^{®}, Sylox ^{®}, Sipernat ^{®}, Sident ^{®}, Aerosil ^{®}, Idisil ^{®}, or any combination thereof, such as Trisyl ^{®}, Daraclar ^{®}, Zeofree ^{®}, Sipernat ^{®}, Sident ^{®}, Aerosil ^{®}, Idisil ^{®}, or any combination thereof or Trisyl ^{®}, Daraclar ^{®}, Zeofree ^{®}, or any combination thereof. Non-limiting examples of silica carrier compounds contemplated herein include Perkasil ^{®} (W. R. Grace & Co), Perkasil ^{®} SM 660 (W. R. Grace & Co), Syloid ^{®} (W. R. Grace & Co), Daraclar ^{®} (W. R. Grace & Co), Trisyl ^{®} (W. R. Grace & Co), Sylox ^{®} (W. R. Grace & Co), Silica gel ^{®} (W. R. Grace & Co), Tixosil ^{®} (Solvay), Tixosil ^{®} 38AB (Solvay), Sipernat ^{®} (Evonik), Sident ^{®} (Evonik), Aerosil ^{®} (Evonik), Idisil ^{®} (Evonik), or Zeofree ^{®} (HUBER).

In some embodiments of any method or sweetener composition described herein, the solvent is water. In some embodiments of any method or sweetener composition described herein, the syrup or solvent comprises a dairy product, milk, condensed milk, cream, buttermilk, yogurt, fruit juice, fruit juice concentrate, nectar, or vegetable juice. In some embodiments of any method described herein, the syrup has a ratio of total sweetener carbohydrate and/or sweetener polyol to solvent or water of at least 30:70, at least 35:65, at least 40:60, at least 45:55, at least 50:50, at least 55:45, at least 60:40, or at least 65:35.

In some embodiments of a method or sweetener composition described herein, a sweetener composition does not comprise an artificial sweetener or a natural sugar substitute. In some embodiments of a method or sweetener composition described herein, a sweetener composition further comprises an artificial sweetener, a natural sugar substitute, or any combination thereof. An artificial sweetener can be one that is selected from the group consisting of: acesulfame potassium, advantame, alitame, aspartame, sodium cyclamate, dulcin, glucin, neohesperidin dihydrochalcone, neotame, P-4000, saccharin, aspartame-acesulfame salt, sucralose, and any combination thereof. A natural sugar substitute can be one that is selected from the group consisting of: brazzein, curculin, glycyrrhizin, glycerol, inulin, mogroside, mabinlin, malto-oligosaccharide, mannitol, miraculin, monatin, monellin, osladin, pentadin, stevia, trilobatin, thaumatin, and any combination thereof.

Any of the sweetener compositions herein can be formulated as particles. A sweetener composition formulated as particles can have at least 50 percent of the particles be between about 1 micron and about 1,000 microns in diameter or have at least 50 percent of the particles be between about 1 micron and about 800 microns in diameter.

In some embodiments of a method or sweetener composition described herein, the sweetener composition is not further dried and is in the form of homogenized syrup. In some embodiments of a method described herein, the method further comprises drying the sweetener composition, wherein the dried sweetener composition is in the form of particles.

In some embodiments of a method or sweetener composition described herein, the sweetener composition comprises at least 10%, 20%, 30%, 40%, 50%, 60%, 70%, 80%, 90%, 95%, 99%, or 100% sweetener carbohydrate and/or sweetener polyol, solvent if present, and carrier compound by weight. In some embodiments, the sweetener composition consists essentially of sweetener carbohydrate and/or sweetener polyol, solvent if present, and carrier compound. In some embodiments, the sweetener composition consists of sweetener carbohydrate and/or sweetener polyol, solvent if present, and carrier compound.

A sweetener composition described herein can be packaged as an isolated sweetener composition or formulated into a sweetener formulation. A sweetener composition can be formulated as a syrup (e.g., a homogenized syrup). This, and other sweetener formulations of the disclosure, can include water. Alternatively, it can be mixed with one or more artificial sweeteners or high intensity sweeteners to improve flavoring (e.g., reduce bitterness) of such artificial or high intensity sweeteners. A sweetener composition described herein can reduce the perceived bitterness of a consumable product.

A sweetener formulation can include a food additive. A sweetener formulation can include an artificial sweetener, a natural sugar substitute, or any combination thereof. Any of the sweetener compositions, sweetener formulations, or consumable products described herein can have a reduced perceived bitterness as compared to the same product made using an artificial sweetener and/or a natural sugar substitute instead of a sweetener composition or made without a sweetener composition as described herein.

The novel features of the invention are set forth with particularity in the appended claims. A better understanding of the features and advantages of the present invention will be obtained by reference to the following detailed description that sets forth illustrative embodiments, in which the principles of the invention are utilized.

### DETAILED DESCRIPTION OF THE INVENTION

### Introduction

The present disclosure relates to sweetener compositions that can be used alone, formulated into sweetener formulations, or added to or further processed into a processed consumable product. The sweetener compositions herein comprise one or more sweetener carbohydrates and/or sweetener polyols and a carrier compound such that they have a sweeter taste than a control composition (e.g., a composition comprising the same contents by identity and quantity as the sweetener composition but without the carrier compound).

### Definitions

As used herein, the term "sweetener carbohydrate" refers to a consumable carbohydrate, which produces a sweet taste when consumed alone. In some cases, a sweetener carbohydrate may be a monosaccharide or disaccharide. A sweetener carbohydrate may be a naturally-occurring carbohydrate. For example, it may be an isolated, purified sweetener. In some cases, a sweetener carbohydrate may be a non-naturally occurring or synthetically-produced carbohydrate. Non-limiting examples of a sweetener carbohydrate include sucrose, glucose, fructose, maltose, lactose, mannose, allulose, tagatose, xylose, galactose, arabinose, galactofructose, high fructose corn syrup, and high maltose corn syrup.

As used herein, the term "sweetener polyol" refers to a consumable polyol which produces a sweet taste when consumed alone. Some non-limiting examples of sweetener polyols include xylitol, maltitol, erythritol, sorbitol, threitol, arabitol, hydrogenated starch hydrolysates, isomalt, lactitol, mannitol, and galactitol (dulcitol). A polyol can be a sugar alcohol. A sugar alcohol can be produced from a corresponding parent carbohydrate by any known method of reduction (via a chemical or biological transformation) of an acid or aldehyde to an alcohol. A sweetener polyol can be created synthetically from a parent carbohydrate. In some cases, a sweetener polyol can be covalently attached to a carbohydrate (e.g., a monosaccharide, or disaccharide). Alternatively or in combination, a sweetener polyol can be bio-derived or obtained from a biological source.

A "sweetener" or "sweetener ingredient" produces a sweet taste when consumed alone. Some non-limiting examples of a sweetener ingredient include a sweetener carbohydrate, sweetener polyol, artificial sweetener, and natural sugar substitute.

As used herein, the term "carrier compound" refers to a solid, food-grade material, which may be coated with a sweetener. A carrier compound, through its large and active surface and structure, may form hydrogen bonds, van der Waals bonds, coordinative bonds, and/or electrostatic interactions with a sweetener carbohydrate and/or sweetener polyol. As such, the carbohydrate and/or polyol can maintain its chemical integrity. For instance, the interaction between the carrier compound and the carbohydrate and/or polyol does not need to involve covalent bonds. The carrier compound may associate with the sweetener carbohydrate and/or sweetener polyol to provide characteristics different than a control composition, for instance enhanced sweetness, reduced bitterness, or reduced rate of dissolution. A carrier compound may be a solid composition lacking a distinctive taste. A carrier compound may be tasteless, flavorless, or odorless. Digestion of a carrier compound by a human may produce a low amount of usable calories. A carrier compound may be non-caloric. A carrier compound may at least partially dissolve in a solvent (e.g., water). A carrier compound optionally meets test requirements as described in the Food Chemicals Codex (FCC), the European Directive, or Japan's Specifications and Standards for Food Additives. Some non-limiting examples of a carrier compound are silica, silicon dioxide, silicate (e.g., sodium silicate, potassium silicate, calcium silicate, aluminum silicate, tetramethylammonium silicate, sodium metasilicate, sodium metasilicate hydrate, calcium metasilicate), silicic acid, chitosan, chitin, starch, maltodextrin, microcrystalline cellulose, hemicellulose, cyclodextrins, hydroxyalkyl cyclodextrins (e.g., hydroxypropyl and methyl cyclodextrins), inulin, pectin, carrageenans, metal oxide, zinc oxide, aluminum oxide, titanium oxide, titanium dioxide, magnesium oxide, magnesium hydroxide, calcium oxide, calcium carbonate, and natural gums (e.g., gum arabic, gellan gum, guar gum, locust bean gum, and xanthan gum). A carrier compound may be a combination of more than one distinct carrier compounds.

A carrier compound can comprise silica or silicon dioxide (SiO₂). According to the invention, the a carrier compound is silica (or silicon dioxide (SiO₂)). Examples of silica contemplated herein include, but are not limited to, colloidal silica; silica particles (e.g., particles comprising silica); precipitated silica; porous silica; colloidal silica; dispersed silica; silica gel; silica sol; porous, precipitated silica; silica gel; amorphous silica; fumed silica; and precipitated, amorphous silica. Examples of silica carrier compounds contemplated herein include, but are not limited to, Perkasil ^{®} (W. R. Grace & Co), Perkasil ^{®} SM 660 (W. R. Grace & Co), Syloid ^{®} (W. R. Grace & Co), Daraclar ^{®} (W. R. Grace & Co), Trisyl ^{®} (W. R. Grace & Co), Sylox ^{®} (W. R. Grace & Co), Silica gel ^{®} (W. R. Grace & Co), Tixosil ^{®} (Solvay), Tixosil ^{®} 38AB (Solvay), Sipernat ^{®} (Evonik), Sident ^{®} (Evonik), Aerosil ^{®} (Evonik), Idisil ^{®} (Evonik), and Zeofree ^{®} (HUBER).

A carrier compound can have an average particle size of up to 1, 2, 3, 4, 5, 7, 8, 9, 10, 11, 12, 13, 14, 15, 20, 25, 30, 35, 40, 45, 50, 55, 60, 65, 70, 75, 80, 85, 90, 95, or 100 microns. A carrier compound can have an average particle size of about or at least 1, 2, 3, 4, 5, 7, 8, 9, 10, 11, 12, 13, 14, 15, 20, 25, 30, 35, 40, 45, 50, 55, 60, 65, 70, 75, 80, 85, 90, 95, or 100 microns. In some embodiments, a carrier compound has an average particle size between 1 and 100, 5 and 100, 1 and 80, 10 and 80, 1 and 50, 10 and 50, 1 and 30, 1 and 10, or 10 and 30 microns.

A carrier compound may have a high specific surface area. In some cases, a carrier compound may have a specific surface area of about or at least 20, 30, 40, 50, 60, 70, 80, 90, 100, 110, 120, 130, 140, 150, 160, 170, 180, 190, 200, 210, 220, 230, 240, 250, 260, 270, 280, 290, 300, 350, 400, 450, 500, 550, 600, 650, 700, 750, 800, 850, 900, 950, or 1000 m²/g. In some cases, a carrier compound may have a specific surface area of up to 20, 30, 40, 50, 60, 70, 80, 90, 100, 110, 120, 130, 140, 150, 160, 170, 180, 190, 200, 210, 220, 230, 240, 250, 260, 270, 280, 290, 300, 350, 400, 450, 500, 550, 600, 650, 700, 750, 800, 850, 900, 950, or 1000 m²/g.

A carrier compound may be in a dehydrated state. For example, the decrease in mass upon drying of a carrier compound can be up to 1, 2, 3, 4, 5, 6, 7, 8, 9, or 10%. A carrier compound can be annealed or dried before being coated with one or more sweetener carbohydrates and/or sweetener polyols. In some cases, a carrier can be heated (e.g., at 400 °C) for at least 0.5, 1, 1.5, 2, 2.5, 3, 3.5, or 4 hours to remove moisture and dry the carrier.

A carrier compound can have moisture or water added to it before being coated with one or more sweetener carbohydrates and/or sweetener polyols. In some cases, a carrier compound can contain up to 0.001%, 0.005%, 0.01%, 0.05%, 0.1%, 0.5%, 1%, 1.5%, 2%, 2.5%, 3%, 3.5%, 4%, 4.5%, 5%, 5.5%, 6%, 10%, 20%, 30%, 40%, 50%, 60%, or 70% water wt/wt before being coated with one or more sweetener carbohydrates and/or sweetener polyols. In some cases, a carrier compound can contain about or at least 0%, 0.001%, 0.005%, 0.01%, 0.05%, 0.1%, 0.5%, 1%, 1.5%, 2%, 2.5%, 3%, 3.5%, 4%, 4.5%, 5%, 5.5%, 6%, 10%, 20%, 30%, 40%, 50%, 60%, or 70% water wt/wt before being coated with one or more sweetener carbohydrates and/or sweetener polyols. In some cases, a carrier compound can contain a moisture level or water content of 0-6%, 0-5%, 1-6%, 1-5%, 2-6%, 1-4%, 2-5%, 3-6%, 1-3%, 2-4%, 3-5%, 4-6%, 6-10%, 10-20%, 20-30%, 30-40%, 40-50%, 50-60%, or 60-70% wt/wt before being coated with one or more sweetener carbohydrates and/or sweetener polyols.

As used herein, the term "solvent" refers to a liquid, which may be mixed with or used to dissolve a sweetener composition or one or more components of a sweetener composition. Non-limiting examples of a solvent include water, ethanol, isopropanol, milk, condensed milk, cream, buttermilk, yogurt, fruit juice, fruit juice concentrate, nectar, vegetable juice, dairy product, or a beverage product. The solvent can be potable. Non-limiting examples of water include purified water, distilled water, double distilled water, deionized water, distilled deionized water, drinking water, well water, tap water, spring water, bottled water, carbonated water, mineral water, flavored water, or any combination thereof. A solvent may be a combination of two or more distinct solvents.

As used herein, the term "control composition" refers to a composition, to which a sweetener composition is compared. In some cases, a control composition comprises the one or more sweetener carbohydrates and/or sweetener polyols but not the carrier compound of the sweetener composition to which it is compared. In some cases, a control composition is formulated similarly to the sweetener composition. In some cases, a control composition is formulated identically to the sweetener composition. The control composition may comprise the same contents by identity and quantity as the one or more sweetener carbohydrates and/or sweetener polyols of a sweetener composition. In some cases, the one or more sweetener carbohydrates and/or sweetener polyols are in free, unassociated form. The control composition may consist of the same contents by identity and quantity as the one or more sweetener carbohydrates and/or sweetener polyols of a sweetener composition. The control composition may consist of the same contents by identity and quantity as the sweetener composition but without the carrier compound.

As used herein, the term "enhanced sweetness" or "higher perceived sweetness" refers to a stronger or higher sense of sweetness to a human. Sweetener compositions with enhanced sweetness may taste sweeter than the control composition to which they are compared. A smaller amount (by weight or by volume) of a sweetener composition with enhanced sweetness may produce the same sense of sweetness as a larger amount (by weight or by volume) of a control composition that lacks enhanced sweetness. In some formulations, the smaller amount (by weight or by volume) of a sweetener composition with enhanced sweetness that produces the same sense of sweetness as a larger amount (by weight or by volume) of a control composition that lacks enhanced sweetness may have a lower caloric content than the control composition. A sweetener composition with enhanced sweetness may produce a higher perceived sweetness than a control composition with a comparable amount (by weight) of the one or more sweetener carbohydrates and/or sweetener polyols in free, unassociated form. For example, 1.0 grams of a sweetener composition comprising about 0.08 grams of a carrier compound coated with about 0.92 grams of one or more sweetener carbohydrates and/or sweetener polyols may produce a higher perceived sweetness than a control composition that comprises about 0.92 grams of the one or more sweetener carbohydrates and/or sweetener polyols and does not comprise the carrier compound. Examples of tasting methodologies that allow for one to determine if a sweetener composition has enhanced sweetness than a control composition are described in more detail herein.

As used herein, the term "consumable product" refers to a product, which comprises a sweetener composition and other ingredients and may be consumed (e.g., by eating, chewing, drinking, tasting, or swallowing). Consumable products include food products, beverage products, pharmaceutical products, and oral hygiene products, as non-limiting examples. Food products include, but are not limited to, confectionary, chocolate, jam, ice cream, frozen yogurt, soup, whipped cream, baked goods, condiments, sauces, dairy products, and dressings. Beverage products include, but are not limited to, soft drink, flavored water, juice, milk, condensed milk, cream, buttermilk, yogurt, fruit juice, fruit juice concentrate, nectar, vegetable juice, sports drink, energy drink, alcoholic beverage, liqueur, carbonated beverage, caffeinated beverage, coffee, cocoa, tea, dairy products, and dairy drinks. Pharmaceutical products include, but are not limited to, cough syrups, capsules, and tablets. Oral hygiene products include, but are not limited to, tooth paste and mouth wash. Other miscellaneous consumable products include, but are not limited to, chewing gum and spices. Dairy products include, but are not limited to, milk, condensed milk, cream, buttermilk, yogurt, ice cream, frozen yogurt, whipped cream, dairy drinks, creme fraiche, clotted cream, single cream, double cream, whipping cream, sour cream, cultured milk, kefir, powdered milk, evaporated milk, ricotta, infant formula, baked milk, butter, clarified butter, cheese, curds, paneer, whey, cottage cheese, cream cheese, casein, clabber, gelato, frozen custard, and ice milk.

As used herein, the term "about" can be understood as within 10%, 9%, 8%, 7%, 6%, 5%, 4%, 3%, 2%, 1%, 0.5%, 0.1%, 0.05%, or 0.01% of the stated value.

### Sweetener Compositions

A sweetener composition comprises one or more sweetener carbohydrates and/or sweetener polyols and a carrier compound, wherein the sweetener composition has enhanced sweetness compared to a control composition. In some cases, the sweetener composition made according to the method of the invention comprises less than 1.9, 1.8, 1.7, 1.6, 1.5, 1.4, 1.3, 1.2, 1.1, or 1% carrier compound weight/weight relative to a sum of total sweetener carbohydrate and sweetener polyol. The control composition has the same contents by identity and quantity as the sweetener composition but without the carrier compound. In some cases, a sweetener composition comprises one or more sweetener carbohydrates and a carrier compound. In some cases, a sweetener composition comprises one or more polyols and a carrier compound. In some cases, a sweetener composition does not contain a sweetener carbohydrate. In some cases, a sweetener composition does not contain a sweetener polyol.

A sweetener composition can be purified or isolated. A sweetener composition is preferably substantially uniform or homogenous. A sweetener composition can be in the form of a solid (e.g., a powder) or a syrup. In some cases, a sweetener composition is dry and/or dehydrated. In some cases, a sweetener composition can be in a solvent (e.g., water).

The sweetener composition made according to the method of the invention has a defined ratio of amounts of the carrier compound and the one or more sweetener carbohydrates and/or sweetener polyols. Such a ratio of amounts is determined by weight. In some cases, a ratio of the carrier compound to a sum of total sweetener carbohydrate and sweetener polyol can be about or at least 0.01%, 0.02%, 0.03%, 0.04%, 0.05%, 0.06%, 0.07%, 0.08%, 0.09%, 0.1%, 0.2%, 0.25%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%. In some cases, a ratio of the carrier compound to a sum of total sweetener carbohydrate and sweetener polyol can be up to 0.01%, 0.02%, 0.03%, 0.04%, 0.05%, 0.06%, 0.07%, 0.08%, 0.09%, 0.1%, 0.2%, 0.25%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%. In some cases, a ratio of the carrier compound to a sum of total sweetener carbohydrate and sweetener polyol can be less than about 0.02%, 0.03%, 0.04%, 0.05%, 0.06%, 0.07%, 0.08%, 0.09%, 0.1%, 0.2%, 0.25%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%. In the sweetener composition made according to the method of the invention, the ratio of the carrier compound to a sum of total sweetener carbohydrate and sweetener polyol is about 0.01-2.0%. The ratio can be between about 0.01-1.0%.

A sweetener composition made according to the method of the invention has enhanced sweetness compared to a control composition. The control composition is the one or more sweetener carbohydrates and/or sweetener polyols but not the carrier compound of the sweetener composition to which it is compared.

The sweetener composition can have a quantified enhanced sweetness. Such enhanced sweetness may be determined by a sensory test. Examples of sensory taste tests are described herein.

In some cases, a sweetener composition can have its sweetness enhanced by about or at least 5%, 10%, 20%, 30%, 40%, 50%, 60%, 70%, 80%, 90%, 100%, 110%, 120%, 130%, 140%, 150%, 160%, 170%, 180%, 190%, 200%, 210%, 220%, 230%, 240%, 250%, 260%, 270%, 280%, 290%, 300%, 350%, 400%, 450%, or 500% relative to a control composition. In some cases, a sweetener composition can have its sweetness enhanced by up to 5%, 10%, 20%, 30%, 40%, 50%, 60%, 70%, 80%, 90%, 100%, 110%, 120%, 130%, 140%, 150%, 160%, 170%, 180%, 190%, 200%, 210%, 220%, 230%, 240%, 250%, 260%, 270%, 280%, 290%, 300%, 350%, 400%, 450%, or 500% relative to a control composition. For example, a sweetener composition can have its sweetness enhanced by 10-500%, 10-300%, 10-200%, 10-100%, 10-80%, 20-70%, or 40-60% relative to a control composition.

The sweetness of a sweetener composition can have a ratio of silica to sweetener carbohydrate and/or sweetener polyol that gives a maximum sweetness. Increasing the amount of silica relative to sweetener carbohydrate and/or sweetener polyol beyond the maximum point can decrease the sweetness of the sweetener composition. In some cases, wherein the amount of silica is higher than the maximum sweetness amount, a grainy, sandy, or chalky characteristic can enter the taste profile. In some cases, when the amount of silica is less than the maximum sweetness amount, the sweetener composition does not fully benefit from the sweetness enhancement effect of the silica. In some cases, the maximum sweetness amount is between about 0.01-2%, 6-12%, or 8-10% carrier compound (wt/wt relative to the sweetener carbohydrate and/or sweetener polyol). In some cases, the maximum sweetness amount is about 0.04%, 0.2%, 6%, or 8% carrier compound (wt/wt relative to the sweetener carbohydrate and/or sweetener polyol).

The physical properties of a sweetener composition, sweetener formulation, or its individual components can be characterized, for example, by elemental analysis, density, viscosity, microscopy, elemental mapping, refractive index (RI), transmission Fourier transform infrared spectroscopy (FTIR), Inductively Coupled Plasma (ICP), Thermogravimetric Analysis (TGA), dynamic light scattering (DLS), or laser diffraction. For example, the sweetener compositions can be powders with small particle sizes. The particle sizes of a sweetener composition can be measured (e.g., by DLS or laser diffraction). The distribution of particle sizes can be measured by size fractionation of particles using sieves with openings of different sizes. Surface area can be measured, for example, by Brunauer-Emmett-Teller (BET) theory or porosimetry (e.g., mercury porosimetry). Physical properties of a sweetener composition may affect its taste properties. For example, the perceived sweetness of a sweetener composition may be correlated to the distribution of particle sizes.

In some cases, a sweetener composition can have an average particle size of up to about 50, 60, 70, 80, 90, 100, 200, 300, 400, 500, 600, 700, 800, 900, or 1,000 microns. In some cases, a sweetener composition can have an average particle size of about or at least about 1, 2, 3, 4, 5, 7, 8, 9, 10, 11, 12, 13, 14, 15, 20, 25, 30, 35, 40, 45, 50, 55, 60, 65, 70, 75, 80, 85, 90, 95, 100, 200, 300, 400, 500, or 600 microns. In some embodiments, a sweetener composition has an average particle size between 1 and 1,000 microns, 1 and 800 microns, 10 and 800 microns, 1 and 500 microns, 50 and 1,000 microns, 10 and 500 microns, or 50 and 800 microns. In some cases, at least 10, 20, 30, 40, 50, 60, 70, 80, or 90 percent of the particles of a sweetener composition described herein are between about 1 micron and about 1,000 microns in diameter, between about 25 microns and about 1,000 microns in diameter, or between about 1 micron and about 800 microns in diameter. In some cases, at least 10, 20, 30, 40, 50, 60, 70, 80, or 90 percent of the particles of a sweetener composition described herein are less than or equal to 1,000, 900, 800, 700, 600, or 500 microns in diameter. In some cases, at least 10, 20, 30, 40, 50, 60, 70, 80, or 90 percent of the particles of a sweetener composition described herein are at least 1, 2, 3, 4, 5, 25, 100, 200, 300, 400, or 500 microns in diameter.

### Methods of Making Sweetener Compositions

In one instance, a method of producing a sweetener composition comprises mechanically coating or mixing a carrier compound with one or more sweetener carbohydrates and/or sweetener polyols. For example, the method of producing a sweetener composition can comprise mechanically coating or mixing the carrier compound silica with one or more sweetener carbohydrates and/or sweetener polyols. Each of the one or more sweetener carbohydrates and/or sweetener polyols and carrier compound can be added simultaneously or sequentially in any order. A carrier compound can be coated with one or more sweetener carbohydrates and/or sweetener polyols by one or more mechanical methods.

A carrier compound can be coated with one or more sweetener carbohydrates and/or sweetener polyols by preparing a dry formulation without using water. For example, one or more sweetener carbohydrates and/or sweetener polyols and a carrier compound can be mixed to form a powder and then subsequently ground together to form close interactions between the sweetener coating and the carrier compound. In some cases, the dry grinding or mixing can form a substantially homogenous solid powder mixture. In one example, a method of producing a sweetener composition comprises mixing one or more sweetener carbohydrates and/or sweetener polyols and a carrier compound without adding water, grinding the mixture in a mechanical grinder and/or in a mortar and pestle, optionally passing the sweetener composition through a sieve (e.g., with a mesh having an opening between about 40 and about 100 mesh), and optionally sonicating and/or homogenizing the mixture. In some cases, mixing and grinding may occur at the same time, for example, a mechanical grinder may mix while grinding.

A sweetener composition can be produced by mixing or dissolving the carrier compound and/or one or more sweetener carbohydrates and/or sweetener polyols in a solvent and optionally performing homogenization and/or sonication. In some cases, individual components may be mixed or dissolved in the same or different solvents. A carrier compound, a solvent, and one or more sweetener carbohydrates and/or sweetener polyols can be mixed together in any order, separately, alternately, simultaneously, or a combination thereof. Each of the carrier compound and/or one or more sweetener carbohydrates and/or sweetener polyols may be mixed with a solvent in any order separately, alternately, simultaneously, or a combination thereof. The method of the invention comprises mixing one or more sweetener carbohydrates and/or sweetener polyols with a solvent and then adding a carrier compound. In some cases, mixing or dissolving in a solvent may occur at a temperature of up to 25, 30, 35, 40, 45, 50, 55, 60, 65, 70, 75, 80, 85, 90, 95, or 100 °C. Sonication or homogenization may occur at a temperature of about or at least 25, 30, 35, 40, 45, 50, 55, 60, 65, 70, 75, 80, 85, 90, 95, or 100 °C. In some cases, mixing or dissolving in a solvent may occur at a temperature of about or at least 25, 30, 35, 40, 45, 50, 55, 60, 65, 70, 75, 80, 85, 90, 95, or 100 °C. In some cases, mixing or dissolving in a solvent may occur at room temperature. In one example of the disclosure, a method to form a sweetener composition comprises mixing one or more sweetener carbohydrates and/or sweetener polyols with water at 70 °C in a ratio of 65/35 carbohydrate/water wt/wt, slowly adding a carrier compound up to 8% wt/wt relative to the sum of sweetener carbohydrates and/or sweetener polyols to form a syrup of sweetener coated carrier, and sonicating and/or homogenizing the syrup. The syrup may optionally be cooled (e.g., to room temperature) prior to sonication and/or homogenization.

During mixing, one or more reaction parameters such as temperature, concentration, stoichiometry, reaction time, order of mixing, mixing speed, mixing time, and pH can be adjusted. Adjusting one or more reaction parameters may affect the molecular structure, porosity, density, and/or particle size of the carrier compound that is formed.

The concentration of one or more sweetener carbohydrates and/or sweetener polyols mixed or dissolved in a solvent can be adjusted. The concentration of one or more sweetener carbohydrates and/or sweetener polyols mixed or dissolved in a solvent may be about or at least 5%, 10%, 15%, 20%, 25%, 30%, 35%, 40%, 45%, 50%, 55%, 60%, 65%, 70%, 75%, 80%, 85%, 90%, 95%, or 100% by weight. The concentration of one or more sweetener carbohydrates and/or sweetener polyols mixed or dissolved in a solvent may be up to 5%, 10%, 15%, 20%, 25%, 30%, 35%, 40%, 45%, 50%, 55%, 60%, 65%, 70%, 75%, 80%, 85%, 90%, 95%, or 100% by weight. In some cases, the concentration of one or more sweetener carbohydrates and/or sweetener polyols mixed or dissolved in a solvent is between about 10-70%, 15-70%, 15-65%, 20-65%, 20-60%, 20-50%, 20-40%, or 20-30%. In some cases, the concentration of one or more sweetener carbohydrates and/or sweetener polyols mixed or dissolved in a solvent is about 20%, about 30%, or about 65%.

In the method of the invention, a carrier compound and one or more sweetener carbohydrates and/or sweetener polyols are mixed by using a solvent. For example, a carrier compound and one or more sweetener carbohydrates and/or sweetener polyols can be mixed by using a solvent to form a paste that can be dried to obtain a solid. In some embodiments, the paste and/or solid is substantially uniform. In some embodiments, the solvent can be water, ethanol, or isopropanol, for example.

A carrier compound, one or more sweetener carbohydrates and/or sweetener polyols, or a sweetener composition can be precipitated from liquid medium by using an antisolvent or volatile liquid. For example, a carrier compound, one or more sweetener carbohydrates and/or sweetener polyols, or a sweetener composition can be precipitated from aqueous solution by using an antisolvent or volatile liquid to form a precipitate that can be filtered and/or dried to obtain a solid. In some embodiments, the antisolvent or volatile liquid can be ethanol. In some embodiments, the antisolvent or volatile liquid is a solvent in which the sweetener composition, carrier compound, and/or one or more sweetener carbohydrates and/or sweetener polyols is sparingly soluble, insoluble, or less soluble than then liquid medium.

### Sweetener Formulations

A sweetener composition may be formulated as a syrup. In some cases, the ratio of total sweetener carbohydrates and/or sweetener polyols to solvent in a sweetener formulation is about or at least 5:95, 10:90, 15:85, 20:80, 25:75, 30:70, 35:65, 40:60, 45:55, 50:50, 55:45, 60:40, 65:35, 70:30, 75:25, 80:20, 85:15, 90:10, 95:5, or 100:0. In some cases, the ratio of total sweetener carbohydrates and/or sweetener polyols to solvent in a sweetener formulation is up to 5:95, 10:90, 15:85, 20:80, 25:75, 30:70, 35:65, 40:60, 45:55, 50:50, 55:45, 60:40, 65:35, 70:30, 75:25, 80:20, 85:15, 90:10, 95:5, or 100:0.

The sweetener compositions herein can be added to or mixed with one or more food additives. Food additives can add volume and/or mass to a sweetener composition. The sweetener compositions herein may be mixed with food additives such that up to 0.001, 0.005, 0.01, 0.05, 0.1, 0.5, 1, 1.5, 2, 2.5, 3, 3.5, 4, 4.5, 5, 6, 7, 8, 9, 10, 15, 20, 25, 30, 35, 40, 45, 50, 55, 60, 65, 70, 75, 80, 85, 90, 91, 92, 93, 94, 95, 96, 97, 98, or 99 weight% of the sweetener formulation is food additives. The sweetener compositions herein may be mixed with food additives such that about or at least 0.001, 0.005, 0.01, 0.05, 0.1, 0.5, 1, 1.5, 2, 2.5, 3, 3.5, 4, 4.5, 5, 6, 7, 8, 9, 10, 15, 20, 25, 30, 35, 40, 45, 50, 55, 60, 65, 70, 75, 80, 85, 90, 91, 92, 93, 94, 95, 96, 97, 98, or 99 weight% of the sweetener formulation is food additives. Some non-limiting examples of a food additive include food coloring, natural flavoring, artificial flavoring, batch marker, food stabilizer, food acid, filler, anticaking agent, antioxidant, bulking agent, color retention agent, emulsifier, humectant, thickener, pharmaceutical excipient, solid diluent, acid salt, alkali salt, organic salt, inorganic salt, nutrient (e.g., macronutrient, micronutrient, essential nutrient, non-essential nutrient, dietary fiber, amino acid, vitamin, dietary mineral), sweetener, artificial sweetener, natural sugar substitute, and preservative, for example. Some non-limiting examples of food additives are silica, silicon dioxide, cellulose, microcrystalline cellulose, powdered cellulose, starch, modified food starch, amylum, calcium carbonate, maltodextrin, hemicellulose, cyclodextrins, hydroxyalkyl cyclodextrins, inulin, pectin, chitin, chitosan, carrageenans, agar, natural gums (e.g., gum arabic, gellan gum, guar gum, locust bean gum, and xanthan gum), and magnesium stearate. Some non-limiting examples of an artificial sweetener are acesulfame potassium, advantame, alitame, aspartame, sodium cyclamate, dulcin, glucin, neohesperidin dihydrochalcone, neotame, P-4000, saccharin, aspartame-acesulfame salt, and sucralose. Some non-limiting examples of natural sugar substitutes are brazzein, curculin, glycyrrhizin, glycerol, inulin, mogroside, mabinlin, malto-oligosaccharide, mannitol, miraculin, monatin, monellin, osladin, pentadin, stevia (including partly stevia components), trilobatin, and thaumatin. In some cases, a compound can function as one or more of a carrier compound, a food additive, and a sweetener carbohydrate or sweetener polyol. A food additive may be a combination of two or more distinct food additives.

In some cases, a sweetener composition and/or sweetener formulation does not comprise DNA, protein, lignin, and/or magnetic particles. In some cases when a dairy product, fruit juice, fruit juice concentrate, nectar, or vegetable juice is used, a sweetener composition and/or sweetener formulation may comprise DNA, protein, and/or lignin. In some cases, a sweetener composition and/or sweetener formulation does not comprise an artificial sweetener, such as sucralose. In some cases, a sweetener composition and/or sweetener formulation does not comprise a natural sugar substitute. In some cases, a sweetener composition and/or sweetener formulation does not comprise a food additive.

About or at least 5, 10, 15, 20, 25, 30, 35, 40, 45, 50, 55, 60, 65, 70, 75, 80, 85, 90, 95, 96, 97, 98, 99, 99.5, 99.9, or 100% of the sweetener formulation by weight may be one, two, three, four, or five components selected from the group consisting of one or more sweetener carbohydrates, one or more sweetener polyols, one or more carrier compounds, one or more solvents, and one or more food additives. Up to 5, 10, 15, 20, 25, 30, 35, 40, 45, 50, 55, 60, 65, 70, 75, 80, 85, 90, 95, 96, 97, 98, 99, 99.5, 99.9, or 100% of the sweetener formulation by weight may be one, two, three, four, or five components selected from the group consisting of one or more sweetener carbohydrates, one or more sweetener polyols, one or more carrier compounds, one or more solvents, and one or more food additives. A component may include one or more examples of that component (e.g., a sweetener formulation consisting of sucrose, glucose, fructose, silica, and water can be considered to contain three components: sweetener carbohydrate, carrier compound, and solvent).

### Methods of Making and/or Formulating Sweetener Compositions and/or Sweetener Formulations

A method of making and/or formulating a sweetener composition and/or sweetener formulation may comprise drying and/or concentrating. In some cases, drying forms a dry, dehydrated, concentrated, and/or solid sweetener composition and/or sweetener formulation. Some non-limiting examples of drying methods include thermal drying, evaporation (e.g., by means of vacuum or air), distillation, boiling, heating in an oven, vacuum drying, spray drying, freeze drying, lyophilization, or any combination thereof. The mechanism of drying can affect the hydration and molecular structure of the sweetener composition and/or formulation thus giving rise to sweetener compositions and/or formulations with different physical properties. The sweetener composition and/or sweetener formulation can be dried until the sweetener composition and/or formulation comprises up to 0.001, 0.005, 0.01, 0.05, 0.1, 0.2, 0.3, 0.4, 0.5, 0.6, 0.7, 0.8, 0.9, 1.0, 1.5, 2, 2.5, 3, 3.5, 4, 4.5, 5, 6, 7, 8, 9, 10, 11, 12, 13, 14, 15, 16, 17, 18, 19, 20, 25, 30, 35, 40, 45, 50, 55, 60, 65, 70, 75, or 80% solvent (e.g., water) by weight. The sweetener composition and/or sweetener formulation can be dried until the sweetener composition and/or formulation comprises about or at least 0.001, 0.005, 0.01, 0.05, 0.1, 0.2, 0.3, 0.4, 0.5, 0.6, 0.7, 0.8, 0.9, 1.0, 1.5, 2, 2.5, 3, 3.5, 4, 4.5, 5, 6, 7, 8, 9, 10, 11, 12, 13, 14, 15, 16, 17, 18, 19, 20, 25, 30, 35, 40, 45, 50, 55, 60, 65, 70, 75, or 80% solvent (e.g., water) by weight. For example, a sweetener composition formulated as a syrup can be dried via any standard drying method (e.g., 12-80 hours in an oven at 60 °C, using industrial air blowers, etc.) to remove a solvent to form a dry solid sweetener composition and/or sweetener formulation. In another example, a sweetener composition formulated as a syrup can be concentrated (e.g., from a syrup with 80% water to a syrup with 35% water).

A method of making and/or formulating a sweetener composition and/or sweetener formulation may comprise diluting and/or hydrating. In some cases, the diluting may comprise addition of a solvent. The sweetener composition and/or sweetener formulation can be diluted until the sweetener composition and/or formulation comprises up to 0.01, 0.05, 0.1, 0.2, 0.3, 0.4, 0.5, 0.6, 0.7, 0.8, 0.9, 1, 1.5, 2, 2.5, 3, 3.5, 4, 4.5, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 95, 96, 97, 98, 99, 99.5, or 99.9% solvent by weight. The sweetener composition and/or sweetener formulation can be diluted until the sweetener composition and/or formulation comprises about or at least 0.01, 0.05, 0.1, 0.2, 0.3, 0.4, 0.5, 0.6, 0.7, 0.8, 0.9, 1, 1.5, 2, 2.5, 3, 3.5, 4, 4.5, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 95, 96, 97, 98, 99, 99.5, or 99.9% solvent (e.g., water) by weight. For example, a sweetener composition formulated as a syrup can be diluted (e.g., from a syrup with 35% water to a syrup with 80% water). In another example, a dry sweetener composition can be hydrated (e.g., from a dry solid to a syrup with 80% water).

A method of making and/or formulating a sweetener composition and/or sweetener formulation may comprise mechanical mixing or grinding. A sweetener composition, sweetener formulation, individual component (e.g., sweetener carbohydrate, sweetener polyol), intermediate, and/or mixture can be mixed or ground by one or more mechanical methods. Non-limiting examples of mechanical methods for mixing, grinding, or coating include stirring, grinding, compressing, blending, agitating, homogenizing, sonicating, rotational mixing, mortar and pestle, Kenics mixing, drum tumbling, Turbula mixing, and any combination thereof. In some cases, two or more forms of mechanical methods can be used in series or in parallel. For example, one or more sweetener carbohydrates and/or sweetener polyols and one or more carrier compounds can be mixed together, ground mechanically in a grinder, and subsequently further ground mechanically via mortar and pestle to achieve coating or mixing of the carrier. For example, a sweetener composition and/or sweetener formulation can be ground mechanically in a grinder and subsequently further ground mechanically via mortar and pestle.

The conditions of the mechanical coating, mixing, or grinding (e.g., temperature, time duration, speed, timing, rate, force, pressure, etc.) can affect the sweetness of the resulting composition and/or formulation. These conditions may be selected to give the largest enhancement of sweetness to the resulting composition and/or formulation. In some cases, mixing or grinding may be carried out for about or at least 0.1, 0.2, 0.3, 0.4, 0.5, 1.0, 2.0, 3.0, 4.0, 5.0, 6.0, 7.0, 8.0, 9.0, 10.0, 12.0, 14.0, 16.0, 18.0, or 20.0 min. In some cases, mixing or grinding may be carried out for up to or at least 0.1, 0.2, 0.3, 0.4, 0.5, 1.0, 2.0, 3.0, 4.0, 5.0, 6.0, 7.0, 8.0, 9.0, 10.0, 12.0, 14.0, 16.0, 18.0, or 20.0 min. In some cases when two or more forms of mechanical methods are used in series or in parallel, the timing and conditions of each form can be selected independently.

A method of making and/or formulating a sweetener composition and/or sweetener formulation may comprise sonicating. A sweetener composition, sweetener formulation, individual component (e.g., sweetener carbohydrate, sweetener polyol), intermediate, and/or mixture can be sonicated and optionally cooled prior to sonication (e.g., to room temperature or to the temperature that sonication occurs at). Sonication can be for up to 1, 2, 3, 4, 5, 6, 7, 8, 9, 10, 12, 14, 16, 20, 24, 30, 40, 50, or 60 min. Sonication can be for about or at least 1, 2, 3, 4, 5, 6, 7, 8, 9, 10, 12, 14, 16, 20, 24, 30, 40, 50, or 60 min. Sonication may occur with heating. Sonication may occur at a temperature of up to 25, 30, 35, 40, 45, 50, 55, 60, 65, 70, 75, 80, 85, 90, 95, or 100 °C. Sonication may occur at a temperature of about or at least 25, 30, 35, 40, 45, 50, 55, 60, 65, 70, 75, 80, 85, 90, 95, or 100 °C. Sonication may occur during grinding or mixing. The sweetener composition and/or sweetener formulation may be sonicated. In some cases, the sweetener composition and/or sweetener formulation is not sonicated. Sonication may be mild. Sonication may be performed in a bath sonicator. Sonication may be performed using a probe sonicator. In some cases, sonication is not performed using a probe sonicator. In some cases, sonication does not affect the particle size of the sweetener composition, carrier compound, and/or sweetener formulation. In some cases, sonication may affect the particle size of the sweetener composition, carrier compound, and/or sweetener formulation.

A method of making and/or formulating a sweetener composition and/or sweetener formulation may comprise homogenizing. A sweetener composition, sweetener formulation, individual component (e.g., sweetener carbohydrate, sweetener polyol), intermediate, and/or mixture can be homogenized and optionally cooled prior to homogenization (e.g., to room temperature or to the temperature that homogenization occurs at). The homogenization can be for up to 1, 2, 3, 4, 5, 6, 7, 8, 9, 10, 12, 14, 16, 20, 24, 30, 40, 50, or 60 min. The homogenization can be for about or at least 1, 2, 3, 4, 5, 6, 7, 8, 9, 10, 12, 14, 16, 20, 24, 30, 40, 50, or 60 min. The homogenization may occur with heating. The homogenization may occur at a temperature of up to 25, 30, 35, 40, 45, 50, 55, 60, 65, 70, 75, 80, 85, 90, 95, or 100 °C. The homogenization may occur at a temperature of about or at least 25, 30, 35, 40, 45, 50, 55, 60, 65, 70, 75, 80, 85, 90, 95, or 100 °C. The homogenization may occur at room temperature. The homogenization may occur under pressure (e.g., up to 2,000 bars). The homogenization may occur during grinding or mixing. The sweetener composition and/or sweetener formulation may be homogenized. In some cases, the sweetener composition and/or sweetener formulation is not homogenized. In some cases, homogenization may be performed in a homogenizer, rotor-stator homogenizer, high-shear mixer (e.g., batch high-shear mixer, inline high-shear mixer, inline powder induction, high-shear granulator, ultra-high-shear inline mixer, high speed disperser, solids injection, high shear rotor-stator mixer, in-tank mixer), high shear homogenizer, high pressure homogenizer, or microfluidizer. In some cases, homogenization does not affect the particle size of the sweetener composition and/or sweetener formulation. In some cases, homogenization may affect the particle size of the sweetener composition, carrier compound, and/or sweetener formulation.

A method of making and/or formulating a sweetener composition and/or sweetener formulation may comprise filtering and/or sieving. A sweetener composition, sweetener formulation, individual component (e.g., sweetener carbohydrate, sweetener polyol), intermediate, and/or mixture can be passed through a sieve or sieving tower to remove particles of particular sizes, of at least a minimum size, of at most a maximum size, or of at least a minimum size and at most a maximum size from the sweetener composition. The sieve can have a mesh with openings up to 18, 20, 25, 30, 40, 50, 60, 70, 80, 90, 100, 110, 120, 130, 140, 150, 160, 170, 180, 190, or 200 mesh. The sieve can have a mesh with openings of about or at least 18, 20, 25, 30, 40, 50, 60, 70, 80, 90, 100, 110, 120, 130, 140, 150, 160, 170, 180, 190, or 200 mesh. The sieve can have a mesh with openings of about 40 to about 100 mesh or openings of about 60 to about 70 mesh.

A method of making and/or formulating a sweetener composition and/or sweetener formulation may comprise isolating or purifying.

### Applications of Sweetener Compositions

A sweetener composition provided herein may be used as a sweetener for a consumable product. A consumable product may comprise a composition provided herein. Some non-limiting examples of a consumable product include food products, beverage products, pharmaceutical products, and oral hygiene products.

The consumable product contains silica. In some cases, the consumable product may contain up to 0.0001, 0.0005, 0.001, 0.005, 0.01, 0.05, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0% silica weight/weight. In some cases, the consumable product may contain about or at least 0.0001, 0.0005, 0.001, 0.005, 0.01, 0.05, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0% silica weight/weight.

The consumable product may have an acidic pH. In some cases, the consumable product may have a pH of about or at least 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, or 6.9. In some cases, the consumable product may have a pH of up to 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, or 6.9.

The consumable product may have a neutral pH. In some cases, the consumable product may have a pH of about or at least 7.0. In some cases, the consumable product may have a pH of up to 7.0.

The consumable product may have a basic pH. In some cases, the consumable product may have a pH of about or at least 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, or 12.9. In some cases, the consumable product may have a pH of up to 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, or 12.9.

A method of producing a consumable product may comprise adding a sweetener composition and/or sweetener formulation to the consumable product or substituting a portion of one or more sweetener ingredients in the consumable product with a sweetener composition and/or formulation. The consumable product may have enhanced sweetness, lower caloric value, reduced bitterness, or any combination thereof. The sweetener composition and/or formulation may reduce the perceived bitterness of a consumable product. The sweetener compositions and/or formulations described herein can function as bitterness reducers and, in some instances, as bitterness masking agents. For example, adding a sweetener composition and/or formulation described herein to a consumable product can reduce or mask a bitter taste. A sweetener composition and/or formulation as described herein can reduce the bitterness of a medicine or pharmaceutical. For example, a method of reducing bitterness in a medicine or pharmaceutical can comprise adding a sweetener composition and/or formulation described herein to the medicine or pharmaceutical. Reducing the bitterness of a medicine can have the beneficial effect of increasing patient compliance and desire to take a medicine, particularly with pediatric patients. A consumable product may comprise one or more modifying components that allow for incorporation of the sweetener composition and/or formulation.

A sweetener composition and/or sweetener formulation described herein can be added to or substituted into (e.g., by replacing a portion of one or more sweetener ingredients in the consumable product) a consumable product to produce at least 1, 2, 3, 4, 5, 6, 7, or 8; up to 1, 2, 3, 4, 5, 6, 7, or 8; or about 1, 2, 3, 4, 5, 6, 7, or 8 of the characteristics selected from the group consisting of increased sweetness, reduction of sweetener used while maintaining sweetness sensation, increased creamy aftertaste, decreased bitter aftertaste, decreased mouth drying aftereffect, decreased metallic aftertaste, decreased liquorice aftertaste, and reduced caloric value of the consumable product. The characteristic of the consumable product comprising the sweetener composition and/or formulation can be compared to a control product that does not have the sweetener composition and/or formulation added to it or substituted into it. For example, a consumable product with an added or substituted sweetener composition and/or formulation can have one or more of the characteristics enhanced by about or at least 5%, 10%, 20%, 30%, 40%, 50%, 60%, 70%, 80%, 90%, 100%, 110%, 120%, 130%, 140%, 150%, 160%, 170%, 180%, 190%, 200%, 210%, 220%, 230%, 240%, 250%, 260%, 270%, 280%, 290%, or 300% relative to a control product. A consumable product with an added or substituted sweetener composition and/or formulation can have one or more of the characteristics enhanced by up to 5%, 10%, 20%, 30%, 40%, 50%, 60%, 70%, 80%, 90%, 100%, 110%, 120%, 130%, 140%, 150%, 160%, 170%, 180%, 190%, 200%, 210%, 220%, 230%, 240%, 250%, 260%, 270%, 280%, 290%, or 300% relative to a control product. For example, the sweetness can be enhanced by 10-500%, 10-300%, 10-200%, 10-100%, 10-80%, 20-70%, or 40-60%.

### Sensory Testing

Enhanced or equivalent sweetness can be determined by a sensory test. The sensory test may be a taste test, a blind test, or a combination thereof. One non-limiting example of a taste test method to measure enhanced sweetness is to taste a set amount of a control composition, and then taste varying amounts of the sweetener composition to find the amount of sweetener composition that corresponds to the sweetness of the control composition. The enhanced sweetness can be calculated by the following formula: [amount of control composition - amount of sweetener composition required for equal sweetness] / [amount of control composition]. For example, varying amounts of a sweetener composition described herein (e.g., 5, 4, 3, 2 and 1 mg of a composition comprising 65% sucrose and 1% silica) are tasted to find an equal sweetness to a control composition (e.g., 5 mg sucrose). In this case, if the test shows that 3 mg of the sweetener composition has an equivalent sweetness to 5 mg of the control composition, then the enhanced sweetness is calculated as (5-3)/5 = 40%.

A sensory test can use one or more various protocols. For example, a sensory test can be the "triangle method", follow ISO requirements, or a combination thereof. The taste test can be the average of multiple trials. For example, each taste tester can consume multiple sweetener compositions or foods, beverages, or consumable products comprising a sweetener composition and sequence them by relative sweetness. A taste test can comprise tasting a standard and determining whether a tested composition is more or less sweet than the standard.

A taste test may be a screening test, a professional taste test, or a market research test. A screening test may be performed by at least 1, 2, 3, 4, 5, 6, 7, 8, or 9 taste testers. A professional taste test may be performed by at least 10, 15, 20, 25, or 30 taste testers. A market research test may be performed by at least 31, 40, 50, 60, 70, 80, 90, 100, 150, 200, 300, 400, or 500 taste testers. In some cases, a taste tester can be a person with average taste perception, a professional taste tester, a person who has passed a tasting exam by correctly identifying foods or food components, or a person who can identify the relative amounts of a taste or flavor (e.g., correctly sequence varying amounts of sugar in water).

### EXAMPLES

Examples 2, 3, 6-13 and 29 are not according to the invention and are present for illustration purposes only.

### Example 1: Preparation of Sweetener Compositions

Sweetener compositions may be produced from solid phase sweetener carbohydrates and/or sweetener polyols. Sweetener compositions may also be produced from dissolved sweetener carbohydrates and/or sweetener polyols, where a solvent (e.g., deionized water) is used. Sweetener compositions may also be produced from sweetener carbohydrates and/or sweetener polyols found naturally in foods. As a non-limiting example, sugars from dairy products, milk, condensed milk, cream, buttermilk, yogurt, fruits and/or vegetables (e.g., fruit juice, fruit juice concentrate, nectar, vegetable juice) may be used to produce a sweetener composition.

A juice, juice concentrate, or nectar can be made from, but is not limited to, acai berry, aloe, apple, apricot, avocado, banana, beetroot, berry, blackberry, black currant, blood orange, blueberry, boysenberry, calamansi, cantaloupe, carrot, celery, cherry, citrus, concord grape, corn, cranberry, cucumber, dandelion, date, dragonfruit, durian, elderberry, fig, ginger, goji, grape, grapefruit, green coconut, guava, honeydew, jackfruit, kaffir lime, kiwifruit, lemon, lettuce, lime, lingonberry, lychee, mango, mangosteen, melon, orange, papaya, parsley, passionfruit, peach, pear, persimmon, pineapple, plum, pomegranate, pomelo, prune, quince, raspberry, red currant, rhubarb, soursop, spinach, strawberry, sugarcane, tamarind, tomato, turnip, watercress, watermelon, wheatgrass, white currant, winter melon, and any combination thereof.

A method of producing a sweetener composition from sweetener carbohydrates and/or sweetener polyols comprises coating or mixing a carrier compound with one or more sweetener carbohydrates and/or sweetener polyols. As a non-limiting example, the method of producing a sweetener composition can comprise coating or mixing the carrier compound silica with one or more sweetener carbohydrates and/or sweetener polyols. Each of the one or more sweetener carbohydrates and/or sweetener polyols and carrier compound can be added simultaneously or sequentially in any order. A carrier compound can be coated with one or more sweetener carbohydrates and/or sweetener polyols by one or more mechanical methods.

### Example 2: Method of producing a sweetener composition from sweetener carbohydrates and/or sweetener polyols in solid phase

A) An optional step comprises pre-mixing or grinding one or more sweetener carbohydrates and/or sweetener polyols and a carrier compound without adding water.
B) The main step comprises the formation of interactions between sweetener carbohydrates and/or sweetener polyols and carrier, as a non-limiting example, by grinding of the mixture of solids in a mechanical or electric mortar and pestle for at least 5 minutes.
C) An optional step comprises passing the sweetener composition through a sieve with a mesh having an opening between about 40 and about 100 mesh. Alternatively or in combination, another optional step comprises sonicating the mixture for at least 5 min in a bath sonicator at 40 kHz and/or homogenizing the mixture.

### Example 3: Method of producing a sweetener composition from sweetener carbohydrates and/or sweetener polyols in solid phase

Sweetener carbohydrates and/or sweetener polyols are mixed and ground with 8% carrier relative to sweetener carbohydrates and/or sweetener polyols weight/weight. Then, the solid-phase mixture is further ground in electric mortar and pestle for at least another 5 minutes. After that, the mixture can optionally be sonicated in a bath sonicator at 40 kHz for 30 minutes and/or homogenized.

### Example 4: Method of producing a sweetener composition from sweetener carbohydrates and/or sweetener polyols dissolved in a solvent

A) One or more sweetener carbohydrates and/or sweetener polyols are dissolved in a solvent (e.g., water, such as deionized water).
B) A carrier compound is added to the dissolved sweetener carbohydrates and/or sweetener polyols. The sweetener carbohydrates and/or sweetener polyols and carrier compound can be added simultaneously or sequentially in any order. The amount of sweetener carbohydrates and/or sweetener polyols used determines the corresponding amount of carrier compound added.
C) The temperature may be optimized. For instance, the temperature may be increased.
D) The mixture of the sweetener carbohydrates and/or sweetener polyols and carrier compound is stirred at the optimized temperature.
E) Sonication is performed to the resulting mixture in a bath sonicator at 40 kHz and/or homogenization is performed to the resulting mixture. The mixture is optionally cooled down (e.g., to room temperature) prior to sonication and/or homogenization.
F) Alternatively or in combination, a carrier compound may be added to the dissolved sweetener carbohydrates and/or sweetener polyols. The mixture may be taken to probe sonication and/or homogenization with or without prior vigorous mixing of the resulting mixture.
G) The sweetener composition is optionally dried. A sweetener composition powder may be obtained.

### Example 5: Method of producing a sweetener composition from sweetener carbohydrates and/or sweetener polyols dissolved in a solvent

A starting solution is prepared with 65% sweetener carbohydrates and/or sweetener polyols and 35% solvent (e.g., deionized water) weight/weight. After the sweetener carbohydrates and/or sweetener polyols are dissolved, the temperature is increased to 65-70 °C and 0.25% carrier, relative to sweetener carbohydrates and/or sweetener polyols weight/weight, is added. The mixture is stirred vigorously at 65-70 °C for 30 minutes and then cooled down to room temperature in an ambient water-bath for 20-30 minutes. After reaching room temperature, the mixture is sonicated in a bath sonicator at 40 kHz and/or homogenized.

### Example 6: Formation of Sucrose Sweetener Compositions with Silica Carrier Compounds

Sucrose (~10 g, pure, food-grade) and various silica (food grade, 6-8% of sucrose) are combined in a Moulinex ^{®} coffee grinding machine. The solids are ground together for 20 s to form a powder (6-8% silica wt/wt in sucrose). The solids are transferred to an electric mortar and pestle. The upper pestle pressure is set at a sufficient upper pressure. The scraper is adjusted to obtain optimal contact with the mortar side. The contact of the pestle with the mortar side is adjusted as to obtain optimal contact. The mixture is ground for 5 minutes using the mortar and pestle. The combined powdered mixture is optionally sonicated for 30 min at 40 °C at 40 KHz and/or homogenized. The mixture is then passed through a sieve (70 mesh) to remove larger particles.

Non-limiting examples of silica used are as following:
- Perkasil ^{®} SM 660, produced by W. R. Grace & Co. 8% relative to sucrose
- Perkasil ^{®} SM 500, produced by W. R. Grace & Co. 7% relative to sucrose
- Trisyl ^{®}, produced by W. R. Grace & Co. 6% relative to sucrose
- Daraclar ^{®} 920, produced by W. R. Grace & Co. 7% relative to sucrose
- Daraclar ^{®} 7500FF, produced by W. R. Grace & Co. 6% relative to sucrose
- Syloid ^{®} XDP, produced by W. R. Grace & Co. 6% relative to sucrose
- Silica gel ^{®}, produced by W. R. Grace & Co. 7% relative to sucrose

The resulting powders that pass through the sieve are tasted against ground and sieved sucrose. Each sample contains 10 mg:

| | **Sucrose** | **Perkasil SM660 8%** | **Perkasil SM500 7%** | **Trisyl 6%** | **Daraclar 920 7%** | **Daraclar 7500FF 6%** | **Syloid XDP 6%** | **Silica gel 7%** |
|---|---|---|---|---|---|---|---|---|
| Taster 1 | X | X+0.25 | X+0.5 | X+0.25 | X+0.5 | X+0.25 | X+0.5 | X+0.25 |
| Taster 2 | X | X+0.5 | X | X+0.25 | X-0.25 | X | X+0.25 | X |
| Taster 3 | X | X+0.25 | X+0.5 | X+0.5 | X+0.5 | X | X | X |
| Taster 4 | X | X | X+0.5 | X+0.25 | X+0.5 | X+0.25 | X+0.5 | X+0.25 |
| Total | 0 | 0.25 | 0.37 | 0.31 | 0.31 | 0.12 | 0.31 | 0.12 |

| | | | | | | | | |
|---|---|---|---|---|---|---|---|---|
| Key: X represents a level of sweetness, X+0.25 represents a taste that is sweeter than X, X+0.5 represents a taste that is sweeter than X+0.25 | | | | | | | | |

### Example 7: Formation of Fructose Sweetener Compositions with Silica

Fructose (~10 g, pure, food-grade) and 8% silica (Perkasil ^{®} SM 660, produced by W. R. Grace & Co.) are combined in a Moulinex ^{®} coffee grinding machine. The solids are ground together for 20 s to form a powder (8% silica wt/wt in fructose). The solids are transferred to an electric mortar and pestle. The upper pestle pressure is set at a sufficient upper pressure. The scraper is adjusted to obtain optimal contact with the mortar side. The contact of the pestle with the mortar side is adjusted as to obtain optimal contact. The mixture is ground for 5 minutes using the mortar and pestle. The combined powdered mixture is optionally sonicated for 30 min at 40 °C at 40 KHz and/or homogenized. The mixture is then passed through a sieve (70 mesh) to remove larger particles. The resulting powders that pass through the sieve are tasted against ground and sieved fructose.

### Example 8: Formation of Mannose Sweetener Compositions with Silica

Mannose (~10 g, pure, food-grade) and 8% silica (Perkasil ^{®} SM 660, produced by W. R. Grace & Co.) are combined in a Moulinex ^{®} coffee grinding machine. The solids are ground together for 20 s to form a powder (8% silica wt/wt in mannose). The solids are transferred to an electric mortar and pestle. The upper pestle pressure is set at a sufficient upper pressure. The scraper is adjusted to obtain optimal contact with the mortar side. The contact of the pestle with the mortar side is adjusted as to obtain optimal contact. The mixture is ground for 5 minutes using the mortar and pestle. The combined powdered mixture is optionally sonicated for 30 min at 40 °C at 40 KHz and/or homogenized. The mixture is then passed through a sieve (70 mesh) to remove larger particles. The resulting powders that pass through the sieve are tasted against ground and sieved mannose.

### Example 9: Formation of Allulose Sweetener Compositions with Silica

Allulose (~10 g, pure, food-grade) and 8% silica (Perkasil ^{®} SM 660, produced by W. R. Grace & Co.) are combined in a Moulinex ^{®} coffee grinding machine. The solids are ground together for 20 s to form a powder (8% silica wt/wt in allulose). The solids are transferred to an electric mortar and pestle. The upper pestle pressure is set at a sufficient upper pressure. The scraper is adjusted to obtain optimal contact with the mortar side. The contact of the pestle with the mortar side is adjusted as to obtain optimal contact. The mixture is ground for 5 minutes using the mortar and pestle. The combined powdered mixture is optionally sonicated for 30 min at 40 °C at 40 KHz and/or homogenized. The mixture is then passed through a sieve (70 mesh) to remove larger particles. The resulting powders that pass through the sieve are tasted against ground and sieved allulose.

### Example 10: Formation of Tagatose Sweetener Compositions with Silica

Tagatose (~10 g, pure, food-grade) and 8% silica (Perkasil ^{®} SM 660, produced by W. R. Grace & Co.) are combined in a Moulinex ^{®} coffee grinding machine. The solids are ground together for 20 s to form a powder (8% silica wt/wt in tagatose). The solids are transferred to an electric mortar and pestle. The upper pestle pressure is set at a sufficient upper pressure. The scraper is adjusted to obtain optimal contact with the mortar side. The contact of the pestle with the mortar side is adjusted as to obtain optimal contact. The mixture is ground for 5 minutes using the mortar and pestle. The combined powdered mixture is optionally sonicated for 30 min at 40 °C at 40 KHz and/or homogenized. The mixture is then passed through a sieve (70 mesh) to remove larger particles. The resulting powders that pass through the sieve are tasted against ground and sieved tagatose.

### Example 11: Formation of Xylose Sweetener Compositions with Silica

Xylose (~10 g, pure, food-grade) and 8% silica (Perkasil ^{®} SM 660, produced by W. R. Grace & Co.) are combined in a Moulinex ^{®} coffee grinding machine. The solids are ground together for 20 s to form a powder (8% silica wt/wt in xylose). The solids are transferred to an electric mortar and pestle. The upper pestle pressure is set at a sufficient upper pressure. The scraper is adjusted to obtain optimal contact with the mortar side. The contact of the pestle with the mortar side is adjusted as to obtain optimal contact. The mixture is ground for 5 minutes using the mortar and pestle. The combined powdered mixture is optionally sonicated for 30 min at 40 °C at 40 KHz and/or homogenized. The mixture is then passed through a sieve (70 mesh) to remove larger particles. The resulting powders that pass through the sieve are tasted against ground and sieved xylose.

### Example 12: Formation of Galactose Sweetener Compositions with Silica

Galactose (~10 g, pure, food-grade) and 8% silica (Perkasil ^{®} SM 660, produced by W. R. Grace & Co.) are combined in a Moulinex ^{®} coffee grinding machine. The solids are ground together for 20 s to form a powder (8% silica wt/wt in galactose). The solids are transferred to an electric mortar and pestle. The upper pestle pressure is set at a sufficient upper pressure. The scraper is adjusted to obtain optimal contact with the mortar side. The contact of the pestle with the mortar side is adjusted as to obtain optimal contact. The mixture is ground for 5 minutes using the mortar and pestle. The combined powdered mixture is optionally sonicated for 30 min at 40 °C at 40 KHz and/or homogenized. The mixture is then passed through a sieve (70 mesh) to remove larger particles. The resulting powders that pass through the sieve are tasted against ground and sieved galactose.

### Example 13: Formation of Arabinose Sweetener Compositions with Silica

Arabinose (~10 g, pure, food-grade) and 8% silica (Perkasil ^{®} SM 660, produced by W. R. Grace & Co.) are combined in a Moulinex ^{®} coffee grinding machine. The solids are ground together for 20 s to form a powder (8% silica wt/wt in arabinose). The solids are transferred to an electric mortar and pestle. The upper pestle pressure is set at a sufficient upper pressure. The scraper is adjusted to obtain optimal contact with the mortar side. The contact of the pestle with the mortar side is adjusted as to obtain optimal contact. The mixture is ground for 5 minutes using the mortar and pestle. The combined powdered mixture is optionally sonicated for 30 min at 40 °C at 40 KHz and/or homogenized. The mixture is then passed through a sieve (70 mesh) to remove larger particles. The resulting powders that pass through the sieve are tasted against ground and sieved arabinose.

### Example 14: Formation of Sucrose Syrup Sweetener Composition

Sucrose is dissolved in deionized water to form 65% sucrose solution. The solution is heated to 65-70 °C, and 0.25% silica (Perkasil ^{®} SM 660, produced by W. R. Grace & Co.) relative to sucrose is added. The mixture is stirred vigorously at 65-70 °C for 30 minutes. Then, the mixture is cooled down to room temperature in an ambient water-bath, for 20-30 minutes. After reaching room temperature, the mixture is sonicated in a bath sonicator, at 40 kHz, and/or homogenized.

Resulting syrup is tasted against 65% sucrose solution.

| | **65% Sucrose** | **Sweetener composition** |
|---|---|---|
| Taster 1 | X | X+0.75 |
| Taster 2 | X | X+0.25 |
| Taster 3 | X | X+0.5 |
| Total | 0 | 0.5 |

| | | |
|---|---|---|
| Key: X represents a level of sweetness, X+0.25 represents a taste that is sweeter than X, X+0.5 represents a taste that is sweeter than X+0.25, X+0.75 represents a taste that is sweeter than X+0.5 | | |

### Example 15: Formation of Sucrose Syrup Sweetener Compositions with Varying Silica Percentages

A) 0.02% Silica: 65% Sucrose solution is prepared by mixing 65 g sucrose with 35 g deionized water. The mixture is transferred to a heated bath, at 70 °C. Silica (0.013 g, Perkasil ^{®} SM 660, pure, food-grade, 0.02% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

B) 0.25% Silica: 65% Sucrose solution is prepared by mixing 65 g sucrose with 35 g deionized water. Mixture is transferred to a heated bath, at 70 °C. Silica (0.1625 g, Perkasil ^{®} SM 660, pure, food-grade, 0.25% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

C) 1% Silica: 65% Sucrose solution is prepared by mixing 65 g sucrose with 35 g deionized water. Mixture is transferred to a heated bath, at 70 °C. Silica (0.65 g, Perkasil ^{®} SM 660, pure, food-grade, 1% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

### Example 16: Tasting Sweetener Compositions Prepared from Xylitol Syrup with Varying Silica Percentages

Four samples of 60% xylitol solutions are prepared using deionized water and xylitol (as an example, 30.00 g xylitol with 20.00 g deionized water). To each sample, a different amount of silica (Perkasil ^{®} SM 660, pure, food-grade) is inserted. Samples are then prepared according to procedure described above, and tasted.

| | **60% xylitol** | **60% xylitol with 0.01% silica** | **60% xylitol with 0.25% silica** | **60% xylitol with 1% silica** |
|---|---|---|---|---|
| Taster 1 | X | X+0.5 | X+0.75 | X+0.25 |
| Taster 2 | X | X+0.75 | X+0.25 | X+0.25 |
| Taster 3 | X | X+0.25 | X+0.5 | X+0.5 |
| Total | 0 | 0.5 | 0.5 | 0.33 |

| | | | | |
|---|---|---|---|---|
| Key: X represents a level of sweetness, X+0.25 represents a taste that is sweeter than X, X+0.5 represents a taste that is sweeter than X+0.25, X+0.75 represents a taste that is sweeter than X+0.5 | | | | |

### Example 17: Sweetener Compositions Prepared from Fructose Syrup with Varying Silica Percentages

A) 0.02% Silica: 65% Fructose solution is prepared by mixing 65 g fructose with 35 g deionized water. The mixture is transferred to a heated bath, at 70 °C. Silica (0.013 g, Perkasil ^{®} SM 660, pure, food-grade, 0.02% relative to fructose) is added to the fructose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

B) 0.25% Silica: 65% Fructose solution is prepared by mixing 65 g fructose with 35 g deionized water. Mixture is transferred to a heated bath, at 70 °C. Silica (0.1625 g, Perkasil ^{®} SM 660, pure, food-grade, 0.25% relative to fructose) is added to the fructose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

C) 1% Silica: 65% Fructose solution is prepared by mixing 65 g fructose with 35 g deionized water. Mixture is transferred to a heated bath, at 70 °C. Silica (0.65 g, Perkasil ^{®} SM 660, pure, food-grade, 1% relative to fructose) is added to the fructose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

E) Samples are tasted against 65% fructose solution.

### Example 18: Sweetener Compositions Prepared from Mannose Syrup with Varying Silica Percentages

A) 0.02% Silica: 65% Mannose solution is prepared by mixing 65 g mannose with 35 g deionized water. The mixture is transferred to a heated bath, at 70 °C. Silica (0.013 g, Perkasil ^{®} SM 660, pure, food-grade, 0.02% relative to mannose) is added to the mannose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
B) 0.25% Silica: 65% Mannose solution is prepared by mixing 65 g mannose with 35 g deionized water. Mixture is transferred to a heated bath, at 70 °C. Silica (0.1625 g, Perkasil ^{®} SM 660, pure, food-grade, 0.25% relative to mannose) is added to the mannose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
C) 1% Silica: 65% Mannose solution is prepared by mixing 65 g mannose with 35 g deionized water. Mixture is transferred to a heated bath, at 70 °C. Silica (0.65 g, Perkasil ^{®} SM 660, pure, food-grade, 1% relative to mannose) is added to the mannose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

E) Samples are tasted against 65% mannose solution.

### Example 19: Sweetener Compositions Prepared from Allulose Syrup with Varying Silica Percentages

A) 0.02% Silica: 65% Allulose solution is prepared by mixing 65 g allulose with 35 g deionized water. The mixture is transferred to a heated bath, at 70 °C. Silica (0.013 g, Perkasil ^{®} SM 660, pure, food-grade, 0.02% relative to allulose) is added to the allulose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
B) 0.25% Silica: 65% Allulose solution is prepared by mixing 65 g allulose with 35 g deionized water. Mixture is transferred to a heated bath, at 70 °C. Silica (0.1625 g, Perkasil ^{®} SM 660, pure, food-grade, 0.25% relative to allulose) is added to the allulose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
C) 1% Silica: 65% Allulose solution is prepared by mixing 65 g allulose with 35 g deionized water. Mixture is transferred to a heated bath, at 70 °C. Silica (0.65 g, Perkasil ^{®} SM 660, pure, food-grade, 1% relative to allulose) is added to the allulose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

E) Samples are tasted against 65% allulose solution.

### Example 20: Sweetener Compositions Prepared from Tagatose Syrup with Varying Silica Percentages

A) 0.02% Silica: 65% Tagatose solution is prepared by mixing 65 g tagatose with 35 g deionized water. The mixture is transferred to a heated bath, at 70 °C. Silica (0.013 g, Perkasil ^{®} SM 660, pure, food-grade, 0.02% relative to tagatose) is added to the tagatose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
B) 0.25% Silica: 65% Tagatose solution is prepared by mixing 65 g tagatose with 35 g deionized water. Mixture is transferred to a heated bath, at 70 °C. Silica (0.1625 g, Perkasil ^{®} SM 660, pure, food-grade, 0.25% relative to tagatose) is added to the tagatose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
C) 1% Silica: 65% Tagatose solution is prepared by mixing 65 g tagatose with 35 g deionized water. Mixture is transferred to a heated bath, at 70 °C. Silica (0.65 g, Perkasil ^{®} SM 660, pure, food-grade, 1% relative to tagatose) is added to the tagatose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

E) Samples are tasted against 65% tagatose solution.

### Example 21: Sweetener Compositions Prepared from Xylose Syrup with Varying Silica Percentages

A) 0.02% Silica: 65% Xylose solution is prepared by mixing 65 g xylose with 35 g deionized water. The mixture is transferred to a heated bath, at 70 °C. Silica (0.013 g, Perkasil ^{®} SM 660, pure, food-grade, 0.02% relative to xylose) is added to the xylose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
B) 0.25% Silica: 65% Xylose solution is prepared by mixing 65 g xylose with 35 g deionized water. Mixture is transferred to a heated bath, at 70 °C. Silica (0.1625 g, Perkasil ^{®} SM 660, pure, food-grade, 0.25% relative to xylose) is added to the xylose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
C) 1% Silica: 65% Xylose solution is prepared by mixing 65 g xylose with 35 g deionized water. Mixture is transferred to a heated bath, at 70 °C. Silica (0.65 g, Perkasil ^{®} SM 660, pure, food-grade, 1% relative to xylose) is added to the xylose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

E) Samples are tasted against 65% xylose solution.

### Example 22: Sweetener Compositions Prepared from Galactose Syrup with Varying Silica Percentages

A) 0.02% Silica: 65% Galactose solution is prepared by mixing 65 g galactose with 35 g deionized water. The mixture is transferred to a heated bath, at 70 °C. Silica (0.013 g, Perkasil ^{®} SM 660, pure, food-grade, 0.02% relative to galactose) is added to the galactose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
B) 0.25% Silica: 65% Galactose solution is prepared by mixing 65 g galactose with 35 g deionized water. Mixture is transferred to a heated bath, at 70 °C. Silica (0.1625 g, Perkasil ^{®} SM 660, pure, food-grade, 0.25% relative to galactose) is added to the galactose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
C) 1% Silica: 65% Galactose solution is prepared by mixing 65 g galactose with 35 g deionized water. Mixture is transferred to a heated bath, at 70 °C. Silica (0.65 g, Perkasil ^{®} SM 660, pure, food-grade, 1% relative to galactose) is added to the galactose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

E) Samples are tasted against 65% galactose solution.

### Example 23: Sweetener Compositions Prepared from Arabinose Syrup with Varying Silica Percentages

A) 0.02% Silica: 65% Arabinose solution is prepared by mixing 65 g arabinose with 35 g deionized water. The mixture is transferred to a heated bath, at 70 °C. Silica (0.013 g, Perkasil ^{®} SM 660, pure, food-grade, 0.02% relative to arabinose) is added to the arabinose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
B) 0.25% Silica: 65% Arabinose solution is prepared by mixing 65 g arabinose with 35 g deionized water. Mixture is transferred to a heated bath, at 70 °C. Silica (0.1625 g, Perkasil ^{®} SM 660, pure, food-grade, 0.25% relative to arabinose) is added to the arabinose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
C) 1% Silica: 65% Arabinose solution is prepared by mixing 65 g arabinose with 35 g deionized water. Mixture is transferred to a heated bath, at 70 °C. Silica (0.65 g, Perkasil ^{®} SM 660, pure, food-grade, 1% relative to arabinose) is added to the arabinose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

E) Samples are tasted against 65% arabinose solution.

### Example 24: Sweetener Compositions Prepared from Sucrose Syrup with Varying Trisyl ^{®} Silica Percentages

A) 0.02% Silica: 65% Sucrose solution is prepared by mixing 65 g sucrose with 35 g deionized water. The mixture is transferred to a heated bath, at 70 °C. Silica (0.013 g, Trisyl ^{®}, pure, food-grade, 0.02% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
B) 0.25% Silica: 65% Sucrose solution is prepared by mixing 65 g sucrose with 35 g deionized water. Mixture is transferred to a heated bath, at 70 °C. Silica (0.1625 g, Trisyl ^{®}, pure, food-grade, 0.25% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
C) 1% Silica: 65% Sucrose solution is prepared by mixing 65 g sucrose with 35 g deionized water. Mixture is transferred to a heated bath, at 70 °C. Silica (0.65 g, Trisyl ^{®}, pure, food-grade, 1% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

E) Samples are tasted against 65% sucrose solution.

### Example 25: Sweetener Compositions Prepared from Sucrose Syrup with Varying Daraclar ^{®} Silica Percentages

A) 0.02% Silica: 65% Sucrose solution is prepared by mixing 65 g sucrose with 35 g deionized water. The mixture is transferred to a heated bath, at 70 °C. Silica (0.013 g, Daraclar ^{®}, pure, food-grade, 0.02% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
B) 0.25% Silica: 65% Sucrose solution is prepared by mixing 65 g sucrose with 35 g deionized water. Mixture is transferred to a heated bath, at 70 °C. Silica (0.1625 g, Daraclar ^{®}, pure, food-grade, 0.25% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
C) 1% Silica: 65% Sucrose solution is prepared by mixing 65 g sucrose with 35 g deionized water. Mixture is transferred to a heated bath, at 70 °C. Silica (0.65 g, Daraclar ^{®}, pure, food-grade, 1% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

E) Samples are tasted against 65% sucrose solution.

### Example 26: Sweetener Compositions Prepared from Sucrose Syrup with Varying Zeofree^{®} Silica Percentages

A) 0.02% Silica: 65% Sucrose solution is prepared by mixing 65 g sucrose with 35 g deionized water. The mixture is transferred to a heated bath, at 70 °C. Silica (0.013 g, Zeofree ^{®}, pure, food-grade, 0.02% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
B) 0.25% Silica: 65% Sucrose solution is prepared by mixing 65 g sucrose with 35 g deionized water. Mixture is transferred to a heated bath, at 70 °C. Silica (0.1625 g, Zeofree ^{®}, pure, food-grade, 0.25% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.
C) 1% Silica: 65% Sucrose solution is prepared by mixing 65 g sucrose with 35 g deionized water. Mixture is transferred to a heated bath, at 70 °C. Silica (0.65 g, Zeofree ^{®}, pure, food-grade, 1% relative to sucrose) is added to the sucrose syrup in portions (while stirring). The resulting solution is stirred vigorously for 30 minutes. After 30 minutes of vigorous stirring, the mixture is left to cool to ambient temperature and then sonicated in a bath sonicator for 30 minutes, at 40 kHz and 40 °C, and/or homogenized.

E) Samples are tasted against 65% sucrose solution.

### Example 27: Formation of Sucrose Syrup Sweetener Composition

Sucrose is dissolved in deionized water to form a 65% sucrose solution. 0.25% silica (Silica gel SP2151, produced by W. R. Grace & Co.) relative to sucrose is added to the solution. The mixture is homogenized using a high shear homogenizer for 3-10 minutes.

Resulting syrup is tasted against 65% sucrose solution.

| | **65% Sucrose** | **Sweetener composition** |
|---|---|---|
| Taster 1 | X | X+1 |
| Taster 2 | X | X+0.5 |
| Taster 3 | X | X+0.45 |
| Total | 0 | 0.65 |

| | | |
|---|---|---|
| Key: X represents a level of sweetness, X+0.45 represents a taste that is sweeter than X, X+0.5 represents a taste that is sweeter than X+0.45, X+1 represents a taste that is sweeter than X+0.5 | | |

### Example 28: Method of producing a sweetener composition from sweetener carbohydrates and/or sweetener polyols found naturally in foods

A) A carrier compound is added to a milk or fruit juice concentrate. The amount of sweetener carbohydrates and/or sweetener polyols in the milk or fruit juice concentrate can dictate the amount of carrier compound used. Carrier compound amount may be up to 8% weight/weight relative to a sum of total sweetener carbohydrate and sweetener polyol in the milk or fruit juice concentrate.
B) The temperature may be optimized. For instance, the temperature may be increased.
C) The milk or fruit juice concentrate and carrier compound mixture is vigorously stirred at the optimized temperature.
D) The resulting mixture is sonicated in a bath sonicator at 40 kHz. The mixture may be, but does not have to be, cooled down to room temperature prior to sonication.
E) Alternatively, the carrier compound may be added to the milk or fruit juice concentrate, and the mixture may be taken to probe sonication and/or homogenization with or without prior vigorous mixing the resulting mixture.
F) Sweetener composition may be dried and a sweetener composition powder may be obtained.

### Example 29: Formation of a sweetener composition from sweetener carbohydrates and/or sweetener polyols found naturally in foods

0.06 g silica (Silica gel ^{®} SP2151) are added to 100 g cranberry juice concentrate (0.25% sugar). Mixture is processed according to the above mentioned procedure in Example 28. Process mixture is diluted to 12.5% sugar and is tasted against diluted concentrate (diluted to 12.5% sugar), which is not processed according to the above mentioned procedure.

| | **Non-Processed Concentrate** | **Processed Concentrate** |
|---|---|---|
| Taster 1 | X | Sweeter, less stringency |
| Taster 2 | X | Sweeter, less stringency |
| Taster 3 | X | Sweeter |
| Taster 4 | X | X |
| Taster 5 | X | Sweeter, less stringency |
| Taster 6 | X | less stringency |

| | | |
|---|---|---|
| Key: X represents a level of sweetness | | |

### Example 30: Formation of Xylitol Syrup Sweetener Composition

Xylitol (250.00 g) and deionized water (250.00 g) are mixed together to form a 50% xylitol solution (W:W). Perkasil ^{®} silica (0.6253 g) is added. The mixture is stirred vigorously at 70°C for 30 min. to obtain a dispersion which is cooled to ambient temperature and then sonicated in a bath sonicator at 40 °C for 30 min.

Resulting syrup is tasted against 50% xylitol solution.

**Key: X represents a level of sweetness, X+0.37 represents a taste that is sweeter than X**

| | **50% Xylitol** | **Sweetener composition** |
|---|---|---|
| Taster 1 | X | X+0.37 |
| Taster 2 | X | X+0.37 |
| Taster 3 | X | X+0.37 |
| Total | 0 | 0.37 |

### Example 31: Sensory Test Procedure

A panel of 8 sensory-tested and trained tasting experts participate in the sensory test. The tests are divided into the following 4 segments:
a) Testing the sensory threshold of the tasters
b) Calibration
c) Control composition versus sweetener composition tastings - in powder and syrup form
d) Control composition versus sweetener composition tastings - powders mixed in a separate medium

Tasting process: Tasting stages, excluding calibration, are conducted in the form of a "triangle test": each participant is given three samples marked with random numbers that include two identical samples and one dissimilar sample. Participants are instructed to name the different sample in each set and explain the difference in their opinion.

Participants are given two sets of tests in each tasting, where one test includes a single reference sample and the other test contains two reference samples.

Sensory threshold: Panel participants are given seven triangle tests that include various concentrations of control composition (e.g., sucrose) dissolved in water.

Calibration step: This step is another form of testing the panel's sensory threshold for sweetness. Panel members are given two samples of control composition (e.g., sucrose) marked "A" and "B" of different concentrations or amounts (e.g., samples of 4 mg and 5 mg) to test the panel's ability to recognize variations.

The remaining tests are conducted similarly - each sample is tested with control composition (e.g., sucrose) as a reference in two sets of triangle tests.

## Claims

1. A method of making a sweetener composition, the method comprising:
adding silica to a syrup comprising a solvent and one or more sweetener carbohydrates and/or sweetener polyols to form a sweetener composition; and
dispersing the silica;
wherein the sweetener composition comprises one or more sweetener carbohydrates and/or sweetener polyols and about 0.01-2% silica weight/weight relative to a sum of total sweetener carbohydrate and sweetener polyol;
the sweetener composition has enhanced sweetness compared to a control composition; and the control composition has the same contents by identity and quantity as the sweetener composition but without the silica.

2. The method of claim 1, wherein the sweetener composition comprises about 0.01-0.5% silica weight/weight relative to a sum of total sweetener carbohydrate and sweetener polyol.

3. The method of claim 1 or claim 2, wherein:
the one or more sweetener carbohydrates are selected from sucrose, glucose, fructose, maltose, lactose, mannose, allulose, tagatose, xylose, galactose, arabinose, galactofructose, high fructose corn syrup, high maltose corn syrup, or any combination thereof; or
the one or more sweetener polyols are selected from the group consisting of xylitol, maltitol, erythritol, sorbitol, threitol, arabitol, hydrogenated starch hydrolysates, isomalt, lactitol, mannitol, galactitol (dulcitol), and any combination thereof.

4. The method of any one of claims 1-3, wherein the one or more sweetener carbohydrates and/or sweetener polyols comprise fructose, mannose, allulose, tagatose, xylose, galactose, arabinose, galactofructose, or any combination thereof.

5. The method of any one of claims 1-4, wherein the sweetener composition comprises a dairy product, fruit juice, fruit juice concentrate, nectar, or vegetable juice.

6. The method of any one of claims 1-5, wherein the silica is precipitated silica, fumed silica, or silica gel.

7. The method of any one of claims 1-6, wherein the sweetener composition does not comprise an artificial sweetener or a natural sugar substitute.

8. The method of any one of claims 1-7, wherein the solvent is water.

9. The method of any one of claims 1-8, wherein the sweetener composition is not further dried and is in the form of homogenized syrup.

10. The method of any one of claims 1-7, further comprising drying the sweetener composition, wherein the dried sweetener composition is in the form of particles.

11. The method of claim 10, wherein at least 50 percent of the particles are between about 1 micron and about 1,000 microns in diameter.

12. The method of any one of claims 1-11, wherein the dispersing the silica comprises sonicating and/or homogenizing the sweetener composition

## Patentansprüche

1. Verfahren zur Herstellung einer Süßstoffzusammensetzung, wobei das Verfahren umfasst:
Zugeben von Siliciumdioxid zu einem Sirup, der ein Lösungsmittel und ein oder mehrere Süßstoffkohlenhydrate und/oder Süßstoffpolyole umfasst, um eine Süßstoffzusammensetzung zu bilden; und
Dispergieren des Siliciumdioxids;
wobei die Süßstoffzusammensetzung ein oder mehrere Süßstoffkohlenhydrate und/oder Süßstoffpolyole und etwa 0,01 - 2 % Siliciumdioxid (Gewicht/Gewicht), bezogen auf die Summe der gesamten Süßstoffkohlenhydrate und Süßstoffpolyole, umfasst;
wobei die Süßstoffzusammensetzung eine erhöhte Süße im Vergleich zu einer Kontrollzusammensetzung aufweist; und die Kontrollzusammensetzung die gleichen Gehalte nach Identität und Menge wie die Süßstoffzusammensetzung, jedoch ohne das Siliciumdioxid, aufweist.

2. Verfahren nach Anspruch 1, wobei die Süßstoffzusammensetzung etwa 0,01 - 0,5 % Siliciumdioxid (Gewicht/Gewicht), bezogen auf die Summe der gesamten Süßstoffkohlenhydrate und Süßstoffpolyole, umfasst.

3. Verfahren nach Anspruch 1 oder Anspruch 2, wobei:
das eine oder die mehreren Süßstoffkohlenhydrate ausgewählt sind aus Saccharose, Glucose, Fructose, Maltose, Lactose, Mannose, Allulose, Tagatose, Xylose, Galactose, Arabinose, Galactofructose, Maissirup mit hohem Fructosegehalt, Maissirup mit hohem Maltosegehalt oder einer Kombination davon; oder
das eine oder die mehreren Süßstoffpolyole ausgewählt sind aus der Gruppe bestehend aus Xylit, Maltit, Erythrit, Sorbit, Threitol, Arabit, hydrierten Stärkehydrolysaten, Isomalt, Lactit, Mannit, Galactit (Dulcit) und einer beliebigen Kombination davon.

4. Verfahren nach einem der Ansprüche 1 - 3, wobei das eine oder die mehreren Süßstoffkohlenhydrate und/oder Süßstoffpolyole Fructose, Mannose, Allulose, Tagatose, Xylose, Galactose, Arabinose, Galactofructose oder eine beliebige Kombination davon umfassen.

5. Verfahren nach einem der Ansprüche 1 - 4, wobei die Süßstoffzusammensetzung ein Milchprodukt, einen Fruchtsaft, ein Fruchtsaftkonzentrat, einen Nektar oder einen Gemüsesaft umfasst.

6. Verfahren nach einem der Ansprüche 1 - 5, wobei das Siliciumdioxid gefälltes Siliciumdioxid, pyrogenes Siliciumdioxid oder Siliciumdioxidgel ist.

7. Verfahren nach einem der Ansprüche 1 - 6, wobei die Süßstoffzusammensetzung weder einen künstlichen Süßstoff noch einen natürlichen Zuckerersatzstoff umfasst.

8. Verfahren nach einem der Ansprüche 1 - 7, wobei das Lösungsmittel Wasser ist.

9. Verfahren nach einem der Ansprüche 1 - 8, wobei die Süßstoffzusammensetzung nicht weiter getrocknet wird und in Form von homogenisiertem Sirup vorliegt.

10. Verfahren nach einem der Ansprüche 1 - 7, das ferner das Trocknen der Süßstoffzusammensetzung umfasst, wobei die getrocknete Süßstoffzusammensetzung in Form von Partikeln vorliegt.

11. Verfahren nach Anspruch 10, wobei mindestens 50 Prozent der Partikel einen Durchmesser zwischen etwa 1 Mikron und etwa 1.000 Mikron aufweisen.

12. Verfahren nach einem der Ansprüche 1 - 11, wobei das Dispergieren des Siliciumdioxids das Beschallen und/oder Homogenisieren der Süßstoffzusammensetzung umfasst.

## Revendications

1. Procédé de production d'une composition édulcorante, le procédé comprenant :
l'ajout de silice à un sirop comprenant un solvant et un ou plusieurs glucides édulcorants et/ou polyols édulcorants pour former une composition édulcorante ; et
la dispersion de la silice ;
dans lequel la composition édulcorante comprend un ou plusieurs glucides édulcorants et/ou polyols édulcorants et environ 0,01 à 2 % de silice masse/masse relativement à une somme de glucide édulcorant et de polyol édulcorant totaux ;
la composition édulcorante a un pouvoir édulcorant amélioré par rapport à une composition de contrôle ; et la composition de contrôle a les mêmes teneurs en identité et quantité que la composition édulcorante mais sans la silice.

2. Procédé selon la revendication 1, dans lequel la composition édulcorante comprend environ 0,01 à 0,5 % de silice masse/masse relativement à une somme de glucide édulcorant et de polyol édulcorant totaux.

3. Procédé selon la revendication 1 ou la revendication 2, dans lequel :
l'un ou les plusieurs glucides édulcorants sont sélectionnés parmi : sucrose, glucose, fructose, maltose, lactose, mannose, allulose, tagatose, xylose, galactose, arabinose, galactofructose, sirop de maïs à haute teneur en fructose, sirop de maïs à haute teneur en maltose, ou une quelconque association de ceux-ci ; ou
l'un ou les plusieurs polyols édulcorants sont sélectionnés parmi le groupe constitué de : xylitol, maltitol, érythritol, sorbitol, thréitol, arabitol, hydrolysats d'amidon hydrogénés, isomalt, lactitol, mannitol, galactitol (dulcitol), et une quelconque association de ceux-ci.

4. Procédé selon l'une quelconque des revendications précédentes 1 à 3, dans lequel l'un ou les plusieurs glucides édulcorants et/ou polyols édulcorants comprennent : fructose, mannose, allulose, tagatose, xylose, galactose, arabinose, galactofructose, ou une quelconque association de ceux-ci.

5. Procédé selon l'une quelconque des revendications précédentes 1 à 4, dans lequel la composition édulcorante comprend un produit laitier, jus de fruit, concentré de jus de fruit, nectar, ou jus de légume.

6. Procédé selon l'une quelconque des revendications précédentes 1 à 5, dans lequel la silice est de la silice précipitée, de la silice fumée, ou un gel de silice.

7. Procédé selon l'une quelconque des revendications précédentes 1 à 6, dans lequel la composition édulcorante ne comprend pas d'édulcorant artificiel ou de substitut de sucre naturel.

8. Procédé selon l'une quelconque des revendications précédentes 1 à 7, dans lequel le solvant est de l'eau.

9. Procédé selon l'une quelconque des revendications précédentes 1 à 8, dans lequel la composition édulcorante n'est pas séchée davantage et est sous la forme de sirop homogénéisé.

10. Procédé selon l'une quelconque des revendications précédentes 1 à 7, comprenant en outre le séchage de la composition édulcorante, dans lequel la composition édulcorante séchée est sous la forme de particules.

11. Procédé selon la revendication 10, dans lequel au moins 50 pour cent des particules mesurent entre environ 1 micron et environ 1 000 microns de diamètre.

12. Procédé selon l'une quelconque des revendications précédentes 1 à 11, dans lequel la dispersion de la silice comprend le traitement par ultrasons et/ou l'homogénéisation de la composition édulcorante.
